# EUROPÄISCHE PATENTANMELDUNG

(11) **EP 4 800 273 A1**
(43) Veröffentlichungstag der Anmeldung: **02.09.2026**
(21) Anmeldenummer: 25220069.6
(22) Anmeldetag: 02.12.2025
(51) Int. Cl.: F16K 11/074, F16K 3/36, F24D 19/10

(54) **VERTEILER-/ZONEN-/UMSCHALTVENTIL**

(30) Priorität: 02.12.2024 DE 202024106988 U
(71) Anmelder: Interforge Innovations GmbH & Co. KG, 27383 Scheeßel (DE)
(72) Erfinder: Klee, Klaus, 27383 Scheeßel (DE)
(74) Vertreter: Eisenführ Speiser

(57) **Zusammenfassung**

Die Erfindung betrifft eine Armatur umfassend ein Gehäuse (2), in dem sich ein erster Strömungspfad von einer Einlassöffnung (3) zu einem Ventil (6) erstreckt, und in dem sich ein zweiter Strömungspfad von dem Ventil zu einer ersten Auslassöffnung (4) erstreckt, und in dem sich ein dritter Strömungspfad von dem Ventil zu einer zweiten Auslassöffnung (5) erstreckt, wobei das Ventil ein stationäres Grundscheibenelement (10) und ein daran stirnseitig anliegendes drehbares Steuerscheibenelement (20) aufweist. Die Erfindung ist dadurch gekennzeichnet, dass eine fossile Bestandsheizung an die erste Auslassöffnung angeschlossen ist und eine Wärmepumpe an die zweite Auslassöffnung angeschlossen ist.

## Beschreibung

Die Erfindung betrifft eine Armatur, umfassend:
- ein Gehäuse, in dem sich ein erster Strömungspfad von einer Einlassöffnung zu einem Ventil erstreckt,
- in dem sich ein zweiter Strömungspfad von dem Ventil zu einer ersten Auslassöffnung erstreckt,
- in dem sich ein dritter Strömungspfad von dem Ventil zu einer zweiten Auslassöffnung erstreckt, und
- wobei das Ventil ein stationäres Grundscheibenelement und ein daran stirnseitig anliegendes drehbares Steuerscheibenelement aufweist, und
- ein außerhalb des Gehäuses angeordnetes Betätigungselement, das über eine Kopplungsstange mit dem Steuerscheibenelement gekoppelt und ausgebildet ist, um das Steuerscheibenelement zwischen verschiedenen Rotationspositionen zu schalten, indem das Steuerscheibenelement um eine Rotationsachse verdreht wird.

Armaturen sind wesentliche Bestandteile in einer Vielzahl von Systemen und Anwendungen, die den Durchfluss von Flüssigkeiten, Luft oder Gasen steuern. Sie werden in einer Vielzahl von Industrien und Anwendungen eingesetzt, einschließlich, aber nicht beschränkt auf, die Heizungs-, Lüftungs- und Klimaanlagenindustrie, die Lebensmittel- und Getränkeindustrie, die pharmazeutische Industrie, die chemische Industrie, die Wasseraufbereitungsindustrie und die Energieerzeugungsindustrie.

Eine typische Armatur umfasst ein Gehäuse mit einer Einlassöffnung und mindestens einer Auslassöffnung. Innerhalb des Gehäuses befindet sich ein Ventil, das den Fluss von Flüssigkeiten oder Gasen durch die Armatur steuert. Das Ventil kann in verschiedenen Positionen fixiert werden, um den Durchfluss zu steuern, und wird typischerweise durch ein externes Betätigungselement, wie einen Hebel, einen Knopf oder elektrischen Antrieb betätigt.

In vielen Anwendungen ist es wünschenswert, dass die Armatur mehrere Auslassöffnungen hat, die unabhängig voneinander gesteuert werden können. Dies ermöglicht es, den Fluss von Fluiden zu mehreren verschiedenen Punkten oder Systemen zu steuern. In solchen Fällen kann die Armatur mehrere Ventile enthalten, jedes davon zugeordnet zu einer der Auslassöffnungen. Durch Umkehr der Durchströmungsrichtung kann die Armatur eine Mischerfunktion ausüben.

Die Materialien, aus denen die Armatur hergestellt ist, können je nach der spezifischen Anwendung variieren. Beispielsweise können Armaturen, die in der Lebensmittel- und Getränkeindustrie verwendet werden, aus rostfreiem Stahl oder anderen korrosionsbeständigen Materialien hergestellt sein. Armaturen, die in der chemischen Industrie verwendet werden, können aus Materialien hergestellt sein, die gegenüber den spezifischen Chemikalien, die durch die Armatur fließen, beständig sind.

Die herkömmlichen Armaturen, die in der Technik bekannt sind, weisen einige Nachteile auf. Sie sind oft nicht in der Lage stufenlos zwischen verschiedenen Rotationspositionen hin- und herzuschalten. Zudem sind herkömmliche Armaturen oft nicht in der Lage, schnell zwischen verschiedenen Durchflussöffnungen umzuschalten. Außerdem sind die den Durchfluss regelnden Armaturenteile anfällig für Verkalkung, Rost und Korrosion.

Die vorliegende Erfindung stellt eine Armatur bereit, die diese Nachteile überwindet. Die Armatur umfasst ein Gehäuse, in dem sich ein erster, zweiter und dritter Strömungspfad erstrecken. Das Ventil der Armatur weist ein stationäres Grundscheibenelement und ein daran stirnseitig anliegendes drehbares Steuerscheibenelement auf. Ein außerhalb des Gehäuses angeordnetes Betätigungselement ist über eine Kopplungsstange mit dem Steuerscheibenelement gekoppelt und ausgebildet, um das Steuerscheibenelement zwischen verschiedenen Rotationspositionen zu schalten, indem das Steuerscheibenelement um eine Rotationsachse verdreht wird.

Ein wesentlicher Vorteil der Erfindung besteht darin, dass das Grundscheibenelement und das Steuerscheibenelement aus einem keramischen Material bestehen können, was sie widerstandsfähiger gegen Verkalkung, Rost und Korrosion macht. Darüber hinaus ermöglicht die Erfindung eine flexible Anpassung der Durchflussrate und des Mediums, da das Steuerscheibenelement stufenlos zwischen verschiedenen Rotationspositionen geschaltet werden kann. Dies ermöglicht eine schnellere Umschaltung zwischen verschiedenen Durchflussöffnungen.

Die Erfindung betrifft eine Armatur, die ein Gehäuse umfasst. Innerhalb des Gehäuses erstreckt sich ein erster Strömungspfad von einer Einlassöffnung zu einem Ventil. Weiterhin erstreckt sich innerhalb des Gehäuses ein zweiter Strömungspfad von dem Ventil zu einer ersten Auslassöffnung und ein dritter Strömungspfad von dem Ventil zu einer zweiten Auslassöffnung. Das Ventil weist ein stationäres Grundscheibenelement und ein daran stirnseitig anliegendes drehbares Steuerscheibenelement auf.

Die Armatur kann von der Einlassöffnung in Richtung der ersten und/oder der zweiten Auslassöffnung durchströmt werden. Die Armatur kann auch in umgekehrte Richtung, von der ersten und/oder der zweiten Auslassöffnung in Richtung der ersten Einlassöffnung durchströmt werden.

Außerhalb des Gehäuses ist ein Betätigungselement angeordnet, das über eine Kopplungsstange mit dem Steuerscheibenelement gekoppelt ist und dazu ausgebildet ist, das Steuerscheibenelement zwischen verschiedenen Rotationspositionen zu schalten, indem das Steuerscheibenelement um eine Rotationsachse verdreht wird.

Das Grundscheibenelement weist eine erste Durchbruchsöffnung auf, die sich über einen ersten Umfangswinkel um die Rotationsachse erstreckt, und eine zweite Durchbruchsöffnung, die sich über einen zweiten Umfangswinkel um die Rotationsachse erstreckt. Die erste und zweite Durchbruchsöffnung im Grundscheibenelement sind durch eine erste Sperrfläche, die am Grundscheibenelement angeordnet ist, voneinander getrennt.

Das Steuerscheibenelement weist mindestens eine dritte Durchbruchsöffnung auf, die sich über einen dritten Umfangswinkel um die Rotationsachse erstreckt. Das Betätigungselement ist mit dem Steuerscheibenelement mechanisch gekoppelt, um ein Drehmoment um die Rotationsachse zu übertragen.

Die Winkel der Durchbruchsöffnungen können jeweils gleichgroß oder verschieden groß sein, dass bedeutet, dass die Winkel, über die sich die Durchbruchsöffnungen erstrecken, entweder gleich oder unterschiedlich sein können. Die Durchbruchsöffnungen können auch verschiedene Formen haben, einschließlich, aber nicht beschränkt auf, dreieckige oder viereckige Formen.

Die erste, zweite und dritte Durchbruchsöffnung sind so angeordnet und der erste, zweite und dritte Umfangswinkel sind so dimensioniert, dass das Steuerscheibenelement zwischen einer ersten Rotationsposition, in welcher die erste Durchbruchsöffnung vollständig überdeckend zu der dritten Durchbruchsöffnung ist, und einer zweiten Rotationsposition, in welcher die zweite Durchbruchsöffnung vollständig überdeckend zu der dritten Durchbruchsöffnung ist, und einer 0-Stellung, in welcher die erste und die zweite Durchbruchsöffnung vollständig durch eine zweite Sperrfläche, die am Steuerscheibenelement angeordnet ist, verschlossen sind, stufenlos hin- und her-rotierbar ist.

Die erste Durchbruchsöffnung oder die zweite Durchbruchsöffnung sind jeweils vollständig geöffnet, wenn die dritte Durchbruchsöffnung so positioniert ist, dass sie die jeweilige Durchbruchsöffnung vollständig überdeckt. Dies bedeutet, dass die dritte Durchbruchsöffnung entweder die gleiche oder eine größere Abmessung als die erste bzw. zweite Durchbruchsöffnung aufweist. **In** einer Position, in der die dritte Durchbruchsöffnung die erste oder zweite Durchbruchsöffnung vollständig überdeckt, ist demnach die erste Durchbruchsöffnung oder die zweite Durchbruchsöffnung vollständig geöffnet. In dieser Stellung ermöglicht die dritte Durchbruchsöffnung einen ungehinderten Durchfluss durch die jeweilige erste oder zweite Durchbruchsöffnung, ohne dass eine teilweise Überlappung verbleibt, die den Fluss einschränken könnte. Die dritte Durchbruchsöffnung ist mindestens genauso groß, oder größer, als die größere der ersten und zweiten Durchbruchsöffnung.

Die Erfindung ermöglicht eine genaue Steuerung des Durchflusses durch die Armatur, indem das Steuerscheibenelement stufenlos zwischen verschiedenen Rotationspositionen geschaltet wird. Durch die spezielle Anordnung und Dimensionierung der Durchbruchsöffnungen und der Sperrflächen kann das Steuerscheibenelement stufenlos zwischen den verschiedenen Positionen rotiert werden, wodurch eine stufenlose Steuerung des Durchflusses ermöglicht wird.

Das Grundscheibenelement und/oder das Steuerscheibenelement können aus einem keramischen Material bestehen. Keramische Materialien haben eine hohe Härte und Verschleißfestigkeit, also eine hohe Beständigkeit gegen Abrieb. Darüber hinaus sind keramische Materialien chemisch inert, was bedeutet, dass sie nicht mit den meisten Substanzen reagieren, die durch die Armatur fließen könnten. Dies ist vorteilhaft für Anwendungen, bei denen aggressive oder korrosive Flüssigkeiten gehandhabt werden müssen. Darüber hinaus haben keramische Materialien eine hohe Temperaturbeständigkeit, was besonders vorteilhaft für Anwendungen ist, bei denen hohe Temperaturen auftreten können. Schließlich haben keramische Materialien eine geringe Wärmeleitfähigkeit, was bedeutet, dass sie dazu beitragen können, Wärmeverluste zu minimieren.

Das Gehäuse der Armatur kann T-förmig oder Y-förmig ausgebildet sein. Diese Formen ermöglichen eine Verteilung des Fluids von der Einlassöffnung zu den beiden Auslassöffnungen, wobei die Armatur auch in umgekehrter Richtung durchströmt werden kann. Bei einer T-förmigen Ausführung sind die Einlassöffnung und die beiden Auslassöffnungen im Wesentlichen in einer geraden Linie angeordnet, wobei das Ventil an der Kreuzung zwischen dem vertikalen und dem horizontalen Abschnitt des "T" positioniert ist. Bei einer Y-förmigen Ausführung hingegen teilt sich der Strömungspfad von der Einlassöffnung in zwei separate Pfade auf, die zu den beiden Auslassöffnungen führen, wobei das Ventil an der Verzweigung des "Y" positioniert ist.

Im Bereich der Einlassöffnung und/oder im Bereich der ersten Auslassöffnung und/oder im Bereich der zweiten Auslassöffnung können Außengewinde, Innengewinde oder andere Anschlussenden angeordnet sein. Diese ermöglichen eine Verbindung der Armatur mit den zugehörigen Rohrleitungen oder anderen Komponenten des angeschlossenen Systems. Die Gewinde können so ausgelegt sein, dass sie mit Standardrohrleitungen oder -verbindungen kompatibel sind, was die Installation und Wartung der Armatur erleichtert. Alternativ können die Anschlussenden auch spezielle Verbindungselemente wie Flansche, Kupplungen oder Schnellverschlüsse umfassen.

Die Spindel kann eine angeformte Strömungshilfe aufweisen. Diese Strömungshilfe kann dazu dienen, den Strömungsfluss innerhalb der Armatur zu optimieren und Turbulenzen oder Strömungsverluste zu minimieren. Die Strömungshilfe kann beispielsweise in Form von Rippen, Lamellen oder einer speziellen Oberflächenstruktur ausgebildet sein, die dazu dient, den Strömungsfluss zu lenken oder zu glätten. Dies kann dazu beitragen, den Druckverlust über die Armatur zu minimieren. Darüber hinaus kann die Strömungshilfe dazu beitragen, Geräusche oder Vibrationen, die durch den Strömungsfluss verursacht werden könnten, zu reduzieren.

Die Armatur kann so ausgelegt sein, dass sie in der Lage ist, in zwei unterschiedlichen Richtungen durchströmt zu werden. Die erste Möglichkeit besteht darin, dass die Flüssigkeit ausgehend von der Einlassöffnung in Richtung des Ventils fließt und aus Richtung des Ventils in Richtung der ersten und/oder zweiten Auslassöffnung fließt. Die zweite Möglichkeit ist, dass die Flüssigkeit ausgehend von der ersten und/oder zweiten Auslassöffnung in Richtung des Ventils fließt und aus Richtung des Ventils in Richtung der Einlassöffnung fließt und so eine Mischerfunktion erreicht wird.

Das Steuerscheibenelement kann durch eine Drehung um 180° zwischen der ersten Rotationsposition und der zweiten Rotationsposition verstellt werden. Das Steuerscheibenelement kann weiterhin jede Position zwischen der ersten und der zweiten Rotationsposition einnehmen.

Die Armatur kann eine Trennwand zwischen der ersten Auslassöffnung und der zweiten Auslassöffnung aufweisen. Diese Trennwand kann dazu dienen, die beiden Auslassöffnungen voneinander zu isolieren und zu verhindern, dass Fluid von einer Auslassöffnung zur anderen fließt. Dies kann besonders in Anwendungen nützlich sein, in denen die beiden Auslassöffnungen zu getrennten Teilen des Fluidsystems führen und eine Vermischung der Fluidströme unerwünscht ist. Die Trennwand kann eine feste, undurchlässige Struktur sein, oder sie kann eine flexible Membran umfassen, das sich bewegen oder verformen kann, um die Strömung des Fluids zu steuern oder zu regulieren.

Die Armatur kann aus verschiedenen Materialien gefertigt sein, darunter Messing, Rotguss, Edelstahl oder Kunststoff. Diese Materialien weisen eine lange Haltbarkeit und Beständigkeit gegen Korrosion und Verschleiß auf. Darüber hinaus sind diese Materialien relativ leicht zu bearbeiten und zu formen, was die Herstellung der Armatur erleichtert. Messing und Rotguss sind besonders geeignet für Anwendungen, bei denen eine hohe Wärmeleitfähigkeit erforderlich ist, während Edelstahl und Kunststoff eine geringere Wärmeleitfähigkeit aufweisen und daher besser für Anwendungen geeignet sind, bei denen eine Isolierung gegen Wärmeübertragung erforderlich ist. Darüber hinaus sind Kunststoffe leicht und korrosionsbeständig.

Die erste Durchbruchsöffnung und/oder die zweite Durchbruchsöffnung und/oder die dritte Durchbruchsöffnung können eine dreieckige Form aufweisen. Diese Form trägt dazu bei, den Druckverlust zu minimieren. Darüber hinaus kann eine dreieckige Form dazu beitragen, die Strömungsgeschwindigkeit der Flüssigkeit durch die Armatur zu erhöhen.

Die Betätigungseinheit der Armatur kann manuell mittels eines Flügelgriffs oder mittels eines an der Spindel angeflanschten Betätigungsstifts erfolgen und/oder mit einem elektrischen Antrieb betrieben werden. Ein Flügelgriff oder ein Betätigungsstift ermöglicht eine einfache und intuitive manuelle Betätigung der Armatur, während ein elektrischer Antrieb eine automatisierte Steuerung des Fluidflusses ermöglicht, was besonders in ferngesteuerten oder voreingestellten Fluidsystemen nützlich sein kann. Der elektrische Antrieb kann die Form eines Motors aufweisen. Der Motor kann dabei so ausgelegt sein, dass dieser unmittelbar fluchtend auf eine Welle greift, die den Motor mit dem Steuerscheibenelement koppelt.

Die Armatur kann eine Schaltstellungsanzeige aufweisen, die den aktuellen Öffnungs- oder Schließzustand der Durchbruchsöffnungen anzeigt. Diese Anzeige kann mechanisch oder elektronisch erfolgen. Eine solche Anzeige kann es dem Bediener ermöglichen, den Zustand der Armatur auf einen Blick zu erkennen. Eine mechanische Anzeige kann beispielsweise einen Zeiger oder eine Skala umfassen, die den Grad der Öffnung oder Schließung der Durchbruchsöffnungen anzeigt. Eine elektronische Anzeige kann beispielsweise eine digitale Anzeige oder eine Leuchtdiode umfassen, die den Zustand der Armatur anzeigt. Darüber hinaus kann die elektronische Anzeige mit einem Steuerungssystem verbunden sein, das die Armatur automatisch steuert und/oder überwacht. Eine Schaltstellungsanzeige kann durch einen Stift für die manuelle Betätigung erfolgen.

Die Armatur kann für Heizungs- und Trinkwasseranwendungen ausgelegt sein und die beiden Durchbruchsöffnungen können für unterschiedliche Wasserkreisläufe ausgelegt sein, wobei die Wassermengen unabhängig voneinander geregelt werden. Beispielsweise kann die Armatur dazu verwendet werden, die Wassermenge in einem Heizkreislauf unabhängig von der Wassermenge in einem Trinkwasserkreislauf zu steuern. Dies kann dazu beitragen den Wasserverbrauch zu optimieren. Darüber hinaus kann die Armatur dazu verwendet werden, die Wassermenge in verschiedenen Teilen eines Gebäudes oder einer Anlage unabhängig voneinander zu steuern.

Das Gehäuse der Armatur kann modular aufgebaut sein. Dies ermöglicht eine einfache Montage und Demontage der Armatur, was die Wartung und Reparatur erleichtert. Darüber hinaus ermöglicht ein modularer Aufbau eine Anpassbarkeit der Armatur an spezifische Anforderungen, da einzelne Module je nach Bedarf hinzugefügt, entfernt oder ausgetauscht werden können. Dies kann auch dazu beitragen, die Kosten für die Herstellung und Wartung der Armatur zu senken, da einzelne Module in großen Mengen hergestellt und gelagert werden können, was zu Kosteneinsparungen durch Massenproduktion führt. Darüber hinaus können beschädigte oder abgenutzte Module einfach ausgetauscht werden, anstatt die gesamte Armatur zu ersetzen, was die Lebensdauer der Armatur verlängert und die Gesamtkosten senkt.

Das Ventil ist dazu ausgebildet schnell zwischen den Rotationspositionen umzuschalten. Insbesondere ist das Ventil dazu ausgebildet zwischen der ersten Rotationsposition und der zweiten Rotationsposition in weniger als 5 Sekunden, vorzugsweise in weniger als 3 Sekunden umzuschalten. Diese schnelle Umschaltzeit verbessert die Effizienz und Reaktionsfähigkeit der Armatur erheblich, wodurch sie besonders geeignet für Anwendungen ist, die eine schnelle Anpassung der Durchflussrate oder des Mediums erfordern. Durch die kurzen Schaltzeiten entstehen keine Mischtemperaturen, die bei herkömmlichen Armaturen, die aus dem Stand der Technik bekannt sind, aufgrund der langen Umschaltzeit von 30 Sekunden auftreten. Solche langen Umschaltzeiten können von der Steuerung falsch interpretiert werden und zu Fehlsteuerungen führen.

Das Steuerscheibenelement kann in eine Mischposition rotierbar sein, die sich zwischen der ersten Rotationsposition und der zweiten Rotationsposition befindet. In dieser Mischposition sind die erste Durchbruchsöffnung und die zweite Durchbruchsöffnung gleichzeitig teilweise oder vollständig überdeckend zu der dritten Durchbruchsöffnung. Dies ermöglicht es, dass Fluid aus beiden Auslassöffnungen gleichzeitig durch die Armatur fließen kann. Dies kann besonders nützlich sein in Anwendungen, in denen eine Mischung von Fluiden aus verschiedenen Quellen oder Kreisläufen erforderlich ist. Darüber hinaus ermöglicht diese Funktion eine genaue Steuerung der Mischungsverhältnisse der Fluide, da das Steuerscheibenelement in jeder Position zwischen der ersten und der zweiten Rotationsposition arretiert werden kann.

Die Armatur kann in einem Heizsystem verwendet werden, in dem eine fossile Bestandsheizung an die erste Auslassöffnung angeschlossen ist und eine Wärmepumpe an die zweite Auslassöffnung angeschlossen ist. Dies ermöglicht eine Nutzung der Wärmeenergie aus beiden Quellen und eine genaue Kontrolle der Mischung von heißem Wasser aus der fossilen Heizung und der Wärmepumpe. Dies kann besonders vorteilhaft sein in Anwendungen, in denen eine genaue Kontrolle der Wassertemperatur erforderlich ist, wie beispielsweise in einem Heizsystem für ein Gebäude. Durch die Verwendung der erfindungsgemäßen Armatur kann die Effizienz des Heizsystems verbessert und der Energieverbrauch reduziert werden. Darüber hinaus kann die Armatur dazu beitragen, die Lebensdauer der fossilen Heizung und der Wärmepumpe zu verlängern, indem sie eine gleichmäßige Verteilung der Wärmeenergie zwischen den beiden Quellen ermöglicht.

In der ersten Rotationsposition kann die erste Durchbruchsöffnung vollständig durch das Steuerscheibenelement verschlossen sein und in der zweiten Rotationsposition kann die zweite Durchbruchsöffnung vollständig durch das Steuerscheibenelement verschlossen sein. Dies stellt sicher, dass in jeder der beiden Endpositionen nur ein Strömungspfad geöffnet ist, wodurch eine Vermischung der Fluide aus den beiden Auslassöffnungen verhindert wird. Dies kann besonders wichtig sein in Anwendungen, in denen die Fluide aus den beiden Auslassöffnungen getrennt gehalten werden müssen, wie zum Beispiel in der Mischerfunktion bei der die Durchströmung von den beiden Auslassöffnungen zu der Einlassöffnung durch zwei gleichgroße dreieckige Öffnungen in der Grundscheibe und einer dreieckigen Öffnung in der Steuerscheibe zur Einlassöffnung gesteuert wird. Die erste Auslassöffnung kann dabei beispielsweise mit einem Heizkreisvorlauf verbunden sein. Die zweite Auslassöffnung kann dabei beispielsweise mit einem Heizkreisrücklauf verbunden. Eine Zieltemperatur an der Einlassöffnung kann dabei durch Zumischung kalten Wassers aus dem Heizkreisrücklauf erreicht werden.

Das Grundscheibenelement und/oder das Steuerscheibenelement können mit Schmiermittelkammern ausgestattet sein. Diese Schmiermittelkammern können als Vertiefung stirnseitig in der ersten und/oder zweiten Sperrfläche ausgebildet sein. Die Schmiermittelkammern können außerhalb der ersten und/oder zweiten Sperrfläche ausgebildet sein. Ein Rotationswinkel, der sich zwischen der ersten Rotationsposition und der zweiten Rotationsposition erstreckt, kann durch Anschläge am Grundscheibenelement und am Steuerscheibenelement begrenzt sein. Die Schmiermittelkammer kann dabei außerhalb dieses Rotationswinkels angeordnet sein. Die Schmiermittelkammern können dazu dienen, Schmiermittel zu speichern, was dazu beiträgt, die Reibung zwischen dem Grundscheibenelement und dem Steuerscheibenelement zu reduzieren. Dies kann dazu beitragen, die Lebensdauer der Armatur zu verlängern. Darüber hinaus kann das Schmiermittel dazu beitragen, die Dichtwirkung zwischen dem Grundscheibenelement und dem Steuerscheibenelement zu verbessern, um Leckagen zu verhindern. Die Anordnung der Schmiermittelkammern außerhalb des Rotationswinkels stellt sicher, dass das Schmiermittel nicht versehentlich aus den Kammern austritt, wenn das Steuerscheibenelement zwischen den verschiedenen Rotationspositionen gedreht wird. Außerdem stellt die Anordnung der Schmiermittelkammern außerhalb des Rotationswinkels sicher, dass die erste Durchbruchsöffnung nicht über einen Strömungspfad mit der zweiten Durchbruchsöffnung miteinander verbunden werden.

Vorzugsweise ist das Steuerscheibenelement in eine Schließposition rotierbar, die sich zwischen der ersten Rotationsposition und der zweiten Rotationsposition befindet, wobei die erste Durchbruchsöffnung und die zweite Durchbruchsöffnung vollständig durch Sperrflächen überdeckt sind, und wobei das Steuerscheibenelement aus der Schließposition gegen den Uhrzeigersinn in die erste Rotationsposition rotierbar ist und im Uhrzeigersinn in die zweite Rotationsposition rotierbar ist, und wobei sich die Sperrflächen des Steuerscheibenelements und des Grundscheibenelements jeweils über einen Umfangswinkel erstrecken, der größer ist als der Umfangswinkel der ersten Durchbruchsöffnung und der Umfangswinkel der zweiten Durchbruchsöffnung.

Durch die Schließposition zwischen der ersten und der zweiten Rotationsposition wird eine definierte Neutralstellung geschaffen, in der beide Durchbruchsöffnungen vollständig verschlossen sind. Dies ermöglicht einen reproduzierbaren Ausgangszustand der Armatur und verhindert ungewollte Durchfluss- oder Mischzustände während eines Umschaltvorgangs. Gleichzeitig erleichtert die Trennung der Rotationsbereiche die elektronische oder mechanische Ansteuerung des Steuerscheibenelements.

Die Erfindung betrifft auch die Verwendung eines Steuerscheibenelements in einer Armatur. Das Steuerscheibenelement kann in einer Armatur gemäß den vorhergehenden Ansprüchen verwendet werden. Das Steuerscheibenelement kann aus verschiedenen Materialien hergestellt werden, einschließlich, aber nicht beschränkt auf, Metalle, Kunststoffe und Keramiken.

Die Erfindung betrifft auch die Verwendung eines Grundscheibenelements in einer Armatur. Das Grundscheibenelement kann in einer Armatur gemäß den vorhergehenden Ansprüchen verwendet werden. Das Grundscheibenelement kann aus verschiedenen Materialien hergestellt werden, einschließlich, aber nicht beschränkt auf, Metalle, Kunststoffe und Keramiken.

Die Erfindung betrifft auch einen Modularsatz für eine Armatur. Der Modularsatz umfasst ein Gehäuse, in das ein Steuerscheibenelement eingesetzt werden kann. Außerhalb des Gehäuses ist ein Betätigungselement angeordnet, das über eine Kopplungsstange mit dem Steuerscheibenelement gekoppelt ist und dazu ausgebildet ist, das Steuerscheibenelement zwischen verschiedenen Rotationspositionen zu schalten, indem das Steuerscheibenelement um eine Rotationsachse verdreht wird.

Das Gehäuse ist so ausgebildet, dass alternativ verschiedene Steuerscheibenelemente in das Gehäuse eingesetzt werden können. Dies ermöglicht eine hohe Flexibilität in Bezug auf die Anpassung der Armatur an spezifische Anforderungen oder Bedingungen, da verschiedene Steuerscheibenelemente je nach Bedarf ausgewählt und in das Gehäuse eingesetzt werden können.

Dieser Modularsatz ermöglicht eine einfache Montage der Armatur, da die einzelnen Komponenten separat geliefert und vor Ort montiert werden können. Darüber hinaus ermöglicht der modulare Aufbau eine einfache Wartung und Reparatur der Armatur, da beschädigte oder abgenutzte Komponenten einfach ausgetauscht werden können, ohne dass die gesamte Armatur ersetzt werden muss.

Die Erfindung betrifft auch eine Gebäudeheizungseinrichtung, die eine erste Heizeinrichtung, insbesondere eine mittels Verbrennung eines Rohstoffs Wärme erzeugende Heizeinrichtung, und eine zweite Heizeinrichtung, insbesondere eine Wärmepumpenheizeinrichtung, die mittels einer Pumpe, eines Wärmetauschers und einer Expansionseinheit Wärme erzeugt, umfasst.

Die Gebäudeheizungseinrichtung umfasst zudem eine erfindungsgemäße Armatur, wobei die erste Auslassöffnung mit einer ersten Heizkreisvorlaufleitung der ersten Heizeinrichtung und die zweite Auslassöffnung mit einer ersten Heizkreisvorlaufleitung der zweiten Heizeinrichtung verbunden ist und die Einlassöffnung mit einem Heizungskörper eines Gebäudes verbunden ist.

Die Erfindung betrifft auch eine Gebäudeheizungseinrichtung, die eine Heizeinrichtung mit einer Heizkreisvorlaufleitung, die in der Heizeinrichtung erhitztes Medium einem Heizkörper zuführt, und eine Heizkreisrücklaufleitung, die in dem Heizkörper abgekühltes Medium der Heizeinrichtung zuführt, umfasst.

Die Gebäudeheizungseinrichtung ist gekennzeichnet durch eine erfindungsgemäße Armatur, wobei die erste Auslassöffnung mit der Heizkreisvorlaufleitung und die zweite Auslassöffnung mit der Heizkreisrücklaufleitung verbunden ist und die Einlassöffnung mit dem Heizungskörper eines Gebäudes verbunden ist. Diese Ausgestaltung ermöglicht eine effiziente Nutzung der von der Heizeinrichtung erzeugten Wärmeenergie und eine genaue Steuerung der Wärmezufuhr zu den Heizkörpern des Gebäudes.

Die Erfindung umfasst weiterhin ein Verfahren zur Steuerung des Durchflusses durch eine Armatur. Zunächst wird eine Armatur bereitgestellt, die ein Gehäuse mit mehreren Strömungspfaden und ein Ventil umfasst. Das Ventil besteht aus einem stationären Grundscheibenelement und einem daran stirnseitig anliegenden drehbaren Steuerscheibenelement. Das Steuerscheibenelement ist über eine Kopplungsstange mit einem außerhalb des Gehäuses angeordneten Betätigungselement verbunden.

Durch das Rotieren des Steuerscheibenelements um eine Rotationsachse kann der Durchfluss durch die Strömungspfade stufenlos gesteuert werden. Eine besondere Eigenschaft dieses Verfahrens ist das Schalten des Steuerscheibenelements in eine Mischposition. Diese Mischposition befindet sich zwischen der ersten Rotationsposition und der zweiten Rotationsposition. **In** dieser Position sind die erste Durchbruchsöffnung und die zweite Durchbruchsöffnung gleichzeitig teilweise überdeckend zu der dritten Durchbruchsöffnung. Dadurch wird eine Mischung der Ströme ermöglicht, was eine genaue Steuerung des Durchflusses erlaubt.

Das Verfahren kann weiterhin umfassen, eine fossile Bestandsheizung an die erste Auslassöffnung der Armatur anzuschließen. Anschließend wird eine Wärmepumpe an die zweite Auslassöffnung angeschlossen. Durch das Rotieren des Steuerscheibenelements kann der Durchfluss von heißem Wasser aus der fossilen Heizung und der Wärmepumpe gemischt werden. Dies ermöglicht es, eine gewünschte Zieltemperatur an der Einlassöffnung zu erreichen. Die genaue Steuerung des Mischverhältnisses der beiden Wärmequellen sorgt für eine effiziente Nutzung der verfügbaren Energiequellen und trägt zur Optimierung des Heizsystems bei.

Bevorzugte Ausführungsformen werden beispielhaft anhand der beiliegenden Figuren erläutert. Es zeigen:
- Fig. 1a, 1b:: Eine längsgeschnittene Seitenansicht und eine Obenaufsicht der erfindungsgemäßen Armatur,
- Fig. 2:: eine Frontalansicht eines erfindungsgemäßen Grundscheibenelements,
- Fig. 3a, 3b:: eine Frontalansicht und eine längs geschnittene Seitenansicht eines erfindungsgemäßen Steuerscheibenelements mit einer vertieften Fläche als Schmiermitteldepot,
- Fig. 4:: eine perspektivische Explosionsansicht der Armatur nach Fig. 1,
- Fig. 5:: eine perspektivische 3-Dimensionale Ansicht der Armatur nach Fig. 1 und
- Fig. 6a, 6b, 6c: eine perspektivische 3-Dimensionale Ansicht der Armatur mit einer Mischerfunktion, sowie jeweils eine Frontalansicht des Grundscheibenelements und des Steuerscheibenelements der Armatur mit einer Mischerfunktion.

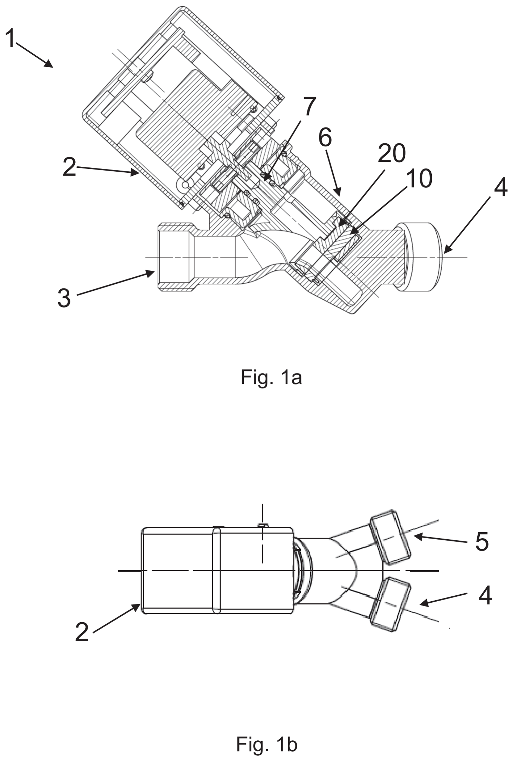

Bezugnehmend zunächst auf die Fig. 1a und 1b umfasst eine erfindungsgemäße Armatur 1 ein Gehäuse 2 mit einer Einlassöffnung 3 und zwei Auslassöffnungen 4 und 5, die jeweils Strömungswege für verschiedene Medien ermöglichen. Die Einlassöffnung 3 ist mit einem Strömungspfad verbunden, der durch ein Ventil 6 gesteuert wird, das aus einem stationären Grundscheibenelement 10 und einem drehbaren Steuerscheibenelement 20 besteht. Die Auslassöffnungen 4 und 5 sind jeweils mit den Strömungswegen des Grundscheibenelements 10 gekoppelt und können je nach Stellung des Steuerscheibenelements 20 geöffnet oder geschlossen werden.

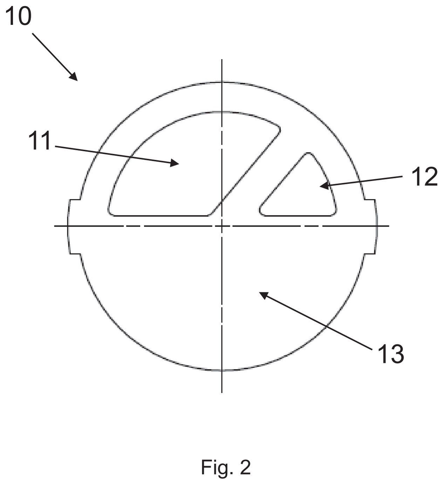

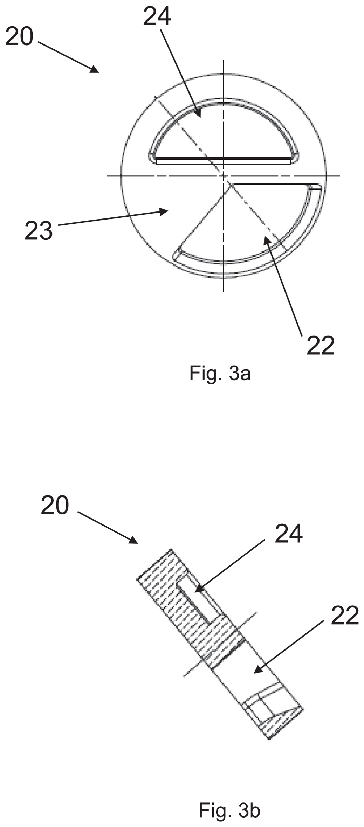

Im Inneren des Gehäuses 2 ist das Steuerscheibenelement 20 mit einer Kopplungsstange 7 verbunden, die zu einem Betätigungselement führt, das die Rotation des Steuerscheibenelements 20 um eine zentrale Rotationsachse ermöglicht. Das Grundscheibenelement 10 nach Fig. 2 weist dabei eine erste Durchbruchsöffnung 11 und eine zweite Durchbruchsöffnung 12 auf, die durch einen dazwischenliegenden Steg voneinander getrennt sind. Diese Durchbruchsöffnungen bestimmen den Fluss durch das Ventil. Die Rotation des Steuerscheibenelements 20 steuert die Überdeckung der dritten Durchbruchsöffnung 22 nach Fig. 3a mit der ersten und zweiten Durchbruchsöffnung 11 und 12 und somit den Durchfluss in die jeweiligen Auslassöffnungen.

Die Fig. 2 zeigt das Grundscheibenelement 10 in einer Frontalansicht, wobei die erste Durchbruchsöffnung 11 und die zweite Durchbruchsöffnung 12 zu sehen sind. Diese Öffnungen erstrecken sich über vorbestimmte Winkelbereiche um die Rotationsachse und sind so angeordnet, dass sie in der jeweiligen Rotationsstellung des Steuerscheibenelements 20 entweder geöffnet oder geschlossen werden können.

Die Fig. 3a und 3b zeigen das Steuerscheibenelement 20 in einer Frontalansicht und in einer längs geschnittenen Seitenansicht. Das Steuerscheibenelement 20 ist mit einer dritten Durchbruchsöffnung 22 versehen, die zur Steuerung des Flüssigkeitsflusses in den verschiedenen Rotationspositionen mit den Durchbruchsöffnungen des Grundscheibenelements 10 überdeckt werden kann. Darüber hinaus weist das Steuerscheibenelement 20 eine Schmiermittelkammer 24 auf, die als Vertiefung in der zweiten Sperrfläche 23 ausgebildet ist.

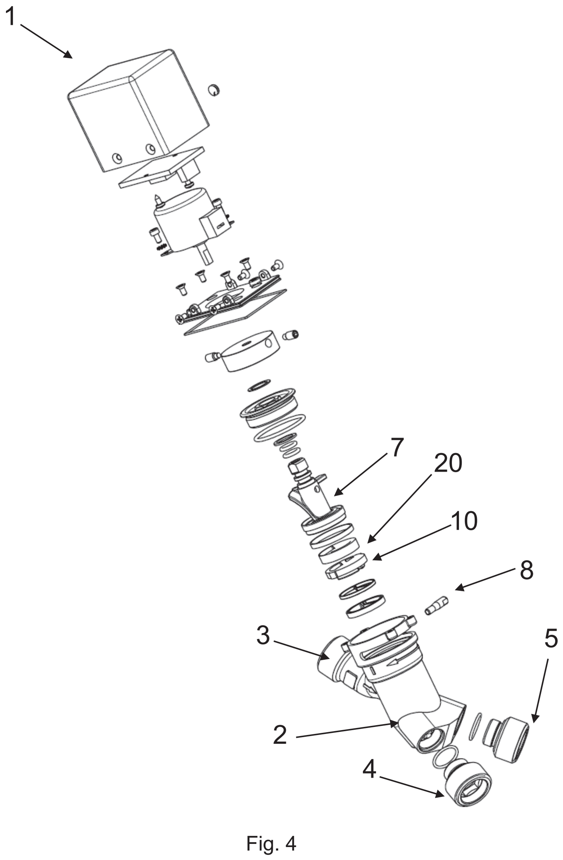

Fig. 4 zeigt eine perspektivische Explosionsansicht der Armatur 1, in der die Hauptkomponenten in ihrer Anordnung zueinander dargestellt sind. Dabei ist das Gehäuse 2 sichtbar, in dem das Grundscheibenelement 10 und das Steuerscheibenelement 20 so positioniert sind, dass das Steuerscheibenelement 20 drehbar am Grundscheibenelement 10 anliegt. Der Betätigungsstift 8 ist am Gehäuse 2 angebracht. Die Kopplungsstange 7 verbindet das Steuerscheibenelement 20 mit dem Betätigungselement und ermöglicht eine Übertragung des Drehmoments von außen auf das Steuerscheibenelement 20. In dieser Explosionsdarstellung sind die Einlassöffnung 3 sowie die Auslassöffnungen 4 und 5 des Gehäuses 2 sichtbar, durch die das Medium in die jeweiligen Strömungspfade geleitet wird.

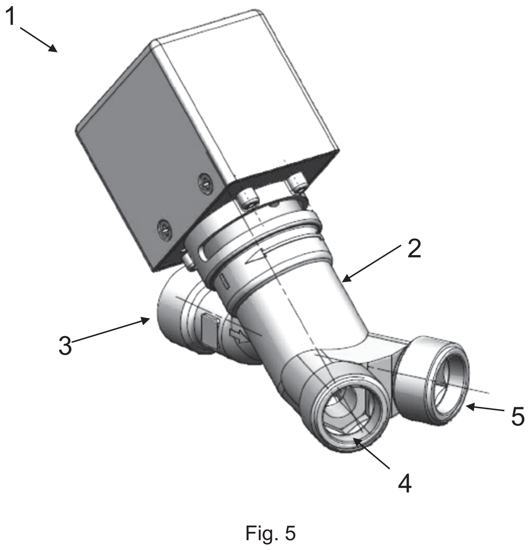

Fig. 5 zeigt eine perspektivische dreidimensionale Ansicht der zusammengebauten Armatur 1. Diese Ansicht zeigt das Gehäuse 2, die Einlassöffnung 3, die erste Auslassöffnung 4 und die zweite Auslassöffnung 5 sowie den inneren Komponenten wie dem Grundscheibenelement 10 und dem Steuerscheibenelement 20.

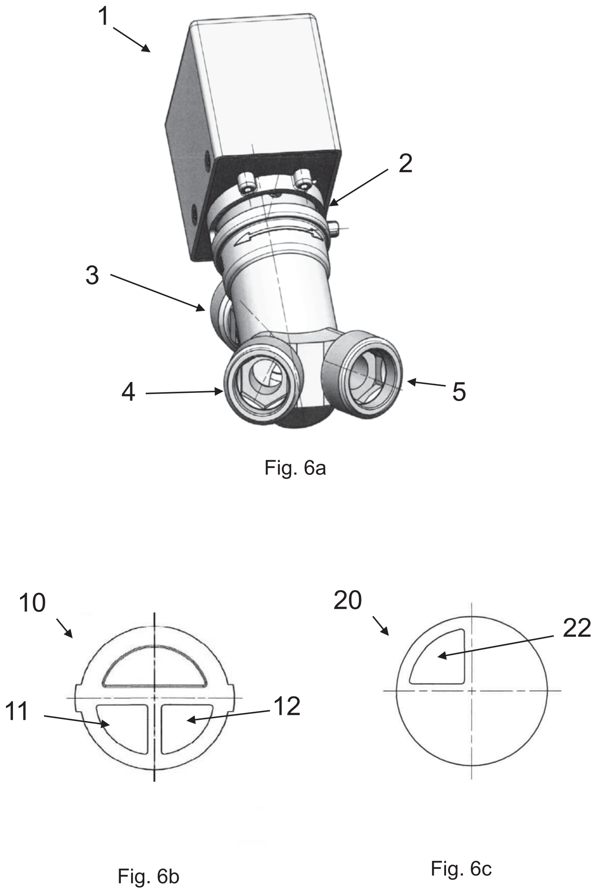

Fig. 6a-c zeigen die Mischerfunktion, Ein Heizkreisvorlauf mit einer höheren Temperatur wird an die Auslassöffnung 4 angeschlossen. Der Heizkreisrücklauf mit dem kälteren Rücklaufwasser wird an die Auslassöffnung 5 angeschlossen. Das Grundscheibenelement 10 hat zwei gleichgroße Öffnungen 11, 12 und das Steuerscheibenelement 20 hat eine dreieckige Öffnung. Die Zieltemperatur an der Einlassöffnung 3 wird durch Zumischung des kälteren Rücklaufwassers erreicht.

### Bezugszeichenliste

- 1: Armatur
- 2: Gehäuse
- 3: Einlassöffnung
- 4: erste Auslassöffnung
- 5: zweite Auslassöffnung
- 6: Ventil
- 7: Kopplungsstange
- 8: Betätigungsstift
- 10: Grundscheibenelement
- 11: erste Durchbruchsöffnung
- 12: zweite Durchbruchsöffnung
- 13: erste Sperrfläche
- 20: Steuerscheibenelement
- 22: dritte Durchbruchsöffnung
- 23: zweite Sperrfläche
- 24: Schmiermittelkammer

## Patentansprüche

1. Armatur umfassend:
- ein Gehäuse,
- in dem sich ein erster Strömungspfad von einer Einlassöffnung zu einem Ventil erstreckt, und
- in dem sich ein zweiter Strömungspfad von dem Ventil zu einer ersten Auslassöffnung erstreckt, und
- in dem sich ein dritter Strömungspfad von dem Ventil zu einer zweiten Auslassöffnung erstreckt,
- wobei das Ventil ein stationäres Grundscheibenelement und ein daran stirnseitig anliegendes drehbares Steuerscheibenelement aufweist,
- ein außerhalb des Gehäuses angeordnetes Betätigungselement, das über eine Kopplungsstange mit dem Steuerscheibenelement gekoppelt und ausgebildet ist, um das Steuerscheibenelement zwischen verschiedenen Rotationspositionen zu schalten, indem das Steuerscheibenelement um eine Rotationsachse verdreht wird,
- wobei das Grundscheibenelement eine erste Durchbruchsöffnung aufweist, die sich über einen ersten Umfangswinkel um die Rotationsachse erstreckt, und eine zweite Durchbruchsöffnung aufweist, die sich über einen zweiten Umfangswinkel um die Rotationsachse erstreckt, wobei die erste und zweite Durchbruchsöffnung im Grundscheibenelement durch eine erste Sperrfläche, die am Grundscheibenelement angeordnet ist, voneinander getrennt sind, und
- das Steuerscheibenelement mindestens eine dritte Durchbruchsöffnung aufweist, die sich über einen dritten Umfangswinkel um die Rotationsachse erstreckt,
- wobei das Betätigungselement mit dem Steuerscheibenelement mechanisch gekoppelt ist zur Übertragung eines Drehmoments um die Rotationsachse,
- wobei die erste, zweite und dritte Durchbruchsöffnung so angeordnet sind und der erste, zweite und dritte Umfangswinkel so dimensioniert sind, dass das Steuerscheibenelement
- zwischen einer ersten Rotationsposition, in welcher die erste Durchbruchsöffnung vollständig überdeckend zu der dritten Durchbruchsöffnung ist, und
- einer zweiten Rotationsposition, in welcher die zweite Durchbruchsöffnung vollständig überdeckend zu der dritten Durchbruchsöffnung ist, und
- einer 0-Stellung, in welcher die erste und die zweite Durchbruchsöffnung vollständig durch eine zweite Sperrfläche die am Steuerscheibenscheibenelement angeordnet ist, verschlossen sind,
- stufenlos hin- und her-rotierbar ist
- wobei das Steuerscheibenelement in eine Mischposition rotierbar ist, die sich zwischen der ersten Rotationsposition und der zweiten Rotationsposition befindet, und wobei die erste Durchbruchsöffnung und die zweite Durchbruchsöffnung gleichzeitig teilweise überdeckend zu der dritten Durchbruchsöffnung sind,
**dadurch gekennzeichnet, dass** eine fossile Bestandsheizung an die erste Auslassöffnung angeschlossen ist und eine Wärmepumpe an die zweite Auslassöffnung angeschlossen ist.

2. Armatur, umfassend:
- ein Gehäuse,
- in dem sich ein erster Strömungspfad von einer Einlassöffnung zu einem Ventil erstreckt, und
- in dem sich ein zweiter Strömungspfad von dem Ventil zu einer ersten Auslassöffnung erstreckt, und
- in dem sich ein dritter Strömungspfad von dem Ventil zu einer zweiten Auslassöffnung erstreckt,
- wobei das Ventil ein stationäres Grundscheibenelement und ein daran stirnseitig anliegendes drehbares Steuerscheibenelement aufweist,
- ein außerhalb des Gehäuses angeordnetes Betätigungselement, das über eine Kopplungsstange mit dem Steuerscheibenelement gekoppelt und ausgebildet ist, um das Steuerscheibenelement zwischen verschiedenen Rotationspositionen zu schalten, indem das Steuerscheibenelement um eine Rotationsachse verdreht wird,
**dadurch gekennzeichnet, dass**
- das Grundscheibenelement
- eine erste Durchbruchsöffnung aufweist, die sich über einen ersten Umfangswinkel um die Rotationsachse erstreckt, und
- eine zweite Durchbruchsöffnung aufweist, die sich über einen zweiten Umfangswinkel um die Rotationsachse erstreckt,
- wobei die erste und zweite Durchbruchsöffnung im Grundscheibenelement durch eine erste Sperrfläche, die am Grundscheibenelement angeordnet ist, voneinander getrennt sind, und
- das Steuerscheibenelement mindestens eine dritte Durchbruchsöffnung aufweist, die sich über einen dritten Umfangswinkel um die Rotationsachse erstreckt,
- wobei das Betätigungselement mit dem Steuerscheibenelement mechanisch gekoppelt ist zur Übertragung eines Drehmoments um die Rotationsachse,
- wobei die erste, zweite und dritte Durchbruchsöffnung so angeordnet sind und der erste, zweite und dritte Umfangswinkel so dimensioniert sind, dass das Steuerscheibenelement
- zwischen einer ersten Rotationsposition, in welcher die erste Durchbruchsöffnung vollständig überdeckend zu der dritten Durchbruchsöffnung ist, und
- einer zweiten Rotationsposition, in welcher die zweite Durchbruchsöffnung vollständig überdeckend zu der dritten Durchbruchsöffnung ist, und
- einer 0-Stellung, in welcher die erste und die zweite Durchbruchsöffnung vollständig durch eine zweite Sperrfläche die am Steuerscheibenscheibenelement angeordnet ist, verschlossen sind,
- stufenlos hin- und her-rotierbar ist und
- wobei die Spindel eine angeformte Strömungshilfe aufweist.

3. Armatur nach einem der vorhergehenden Ansprüche 1 oder 2, **dadurch gekennzeichnet, dass** das Grundscheibenelement und/oder das Steuerscheibenelement aus einem keramischen Material bestehen.

4. Armatur nach einem der vorhergehenden Ansprüche, **dadurch gekennzeichnet, dass** die Armatur eine Trennwand zwischen der ersten Auslassöffnung und der zweiten Auslassöffnung aufweist und/oder
dass die erste Durchbruchsöffnung und/oder die zweite Durchbruchsöffnung und/oder die dritte Durchbruchsöffnung eine dreieckige Form aufweist/aufweisen.

5. Armatur nach einem der vorhergehenden Ansprüche, **dadurch gekennzeichnet, dass** die Betätigungseinheit der Armatur manuell mittels eines Flügelgriffs oder mittels eines an der Spindel angeflanschten Betätigungsstifts erfolgt und/oder mit einem elektrischen Antrieb betrieben wird.

6. Armatur nach einem der vorhergehenden Ansprüche, **dadurch gekennzeichnet, dass** die Armatur eine Schaltstellungsanzeige aufweist, die den aktuellen Öffnungs- oder Schließzustand der ersten und/oder zweiten und/oder dritten Durchbruchsöffnung anzeigt, wobei die Anzeige optisch, elektronisch oder mechanisch insbesondere durch einen Betätigungsstift erfolgt.

7. Armatur nach einem der vorhergehenden Ansprüche, **dadurch gekennzeichnet, dass** die Armatur für Heizungs- und Trinkwasseranwendungen ausgelegt ist und die beiden Durchbruchsöffnungen für unterschiedliche Wasserkreisläufe ausgelegt sind, wobei die Wassermengen unabhängig voneinander geregelt werden.

8. Armatur nach einem der vorhergehenden Ansprüche, **dadurch gekennzeichnet, dass** das Steuerscheibenelement in eine Mischposition rotierbar ist, die sich zwischen der ersten Rotationsposition und der zweiten Rotationsposition befindet, wobei die erste Durchbruchsöffnung und die zweite Durchbruchsöffnung gleichzeitig teilweise überdeckend zu der dritten Durchbruchsöffnung sind.

9. Armatur nach einem der vorhergehenden Ansprüche, **dadurch gekennzeichnet, dass**
- in der ersten Rotationsposition die erste Durchbruchsöffnung vollständig von der zweiten Sperrfläche verschlossen ist, und
- in der zweiten Rotationsposition die zweite Durchbruchsöffnung vollständig von der dritten Sperrfläche verschlossen ist.

10. Armatur nach einem der vorhergehenden Ansprüche, **dadurch gekennzeichnet, dass** das Grundscheibenelement und/oder das Steuerscheibenelement mit Schmiermittelkammern ausgestattet sind,
- wobei die Schmiermittelkammer als Vertiefung stirnseitig in der ersten und/oder zweiten Sperrfläche ausgebildet ist,
- wobei sich ein Rotationswinkel zwischen der ersten Rotationsposition und der zweiten Rotationsposition erstreckt,
- wobei das Grundscheibenelement und das Steuerscheibenelement Anschläge aufweisen, sodass der Rotationswinkel durch diese Anschläge begrenzt ist,
- wobei die Schmiermittelkammer außerhalb des Rotationswinkels angeordnet ist.

11. Verwendung eines Steuerscheibenelements in einer Armatur nach einem der Ansprüche 1-10 und/oder
Verwendung eines Grundscheibenelements in einer Armatur nach einem der Ansprüche 1- 10.

12. Gebäudeheizungseinrichtung, umfassend
- eine erste Heizeinrichtung, insbesondere eine mittels Verbrennung eines Rohstoffs Wärme erzeugende Heizeinrichtung,
- eine zweite Heizeinrichtung, insbesondere eine Wärmepumpenheizeinrichtung, die mittels einer Pumpe, eines Wärmetauschers und einer Expansionseinheit Wärme erzeugt,
- eine Armatur, umfassend:
- ein Gehäuse,
- in dem sich ein erster Strömungspfad von einer Einlassöffnung zu einem Ventil erstreckt, und
- in dem sich ein zweiter Strömungspfad von dem Ventil zu einer ersten Auslassöffnung erstreckt, und
- in dem sich ein dritter Strömungspfad von dem Ventil zu einer zweiten Auslassöffnung erstreckt,
- wobei das Ventil ein stationäres Grundscheibenelement und ein daran stirnseitig anliegendes drehbares Steuerscheibenelement aufweist,
- ein außerhalb des Gehäuses angeordnetes Betätigungselement, das über eine Kopplungsstange mit dem Steuerscheibenelement gekoppelt und ausgebildet ist, um das Steuerscheibenelement zwischen verschiedenen Rotationspositionen zu schalten, indem das Steuerscheibenelement um eine Rotationsachse verdreht wird,
- wobei das Grundscheibenelement eine erste Durchbruchsöffnung aufweist, die sich über einen ersten Umfangswinkel um die Rotationsachse erstreckt, und eine zweite Durchbruchsöffnung aufweist, die sich über einen zweiten Umfangswinkel um die Rotationsachse erstreckt, wobei die erste und zweite Durchbruchsöffnung im Grundscheibenelement durch eine erste Sperrfläche, die am Grundscheibenelement angeordnet ist, voneinander getrennt sind, und
- das Steuerscheibenelement mindestens eine dritte Durchbruchsöffnung aufweist, die sich über einen dritten Umfangswinkel um die Rotationsachse erstreckt,
- wobei das Betätigungselement mit dem Steuerscheibenelement mechanisch gekoppelt ist zur Übertragung eines Drehmoments um die Rotationsachse,
- wobei die erste, zweite und dritte Durchbruchsöffnung so angeordnet sind und der erste, zweite und dritte Umfangswinkel so dimensioniert sind, dass das Steuerscheibenelement
- zwischen einer ersten Rotationsposition, in welcher die erste Durchbruchsöffnung vollständig überdeckend zu der dritten Durchbruchsöffnung ist, und
- einer zweiten Rotationsposition, in welcher die zweite Durchbruchsöffnung vollständig überdeckend zu der dritten Durchbruchsöffnung ist, und
- einer 0-Stellung, in welcher die erste und die zweite Durchbruchsöffnung vollständig durch eine zweite Sperrfläche die am Steuerscheibenscheibenelement angeordnet ist, verschlossen sind,
- stufenlos hin- und her-rotierbar ist
- oder
- eine Armatur nach einem der vorhergehenden Ansprüche 1-10,
- wobei die erste Auslassöffnung mit einer ersten Heizkreisvorlaufleitung der ersten Heizeinrichtung und die zweite Auslassöffnung mit einer ersten Heizkreisvorlaufleitung der zweiten Heizeinrichtung verbunden ist und die Einlassöffnung mit einem Heizungskörper eines Gebäudes verbunden ist.

13. Gebäudeheizungseinrichtung, umfassend
- eine Heizeinrichtung, mit einer Heizkreisvorlaufleitung, die in der Heizeinrichtung erhitztes Medium einem Heizkörper zuführt, und eine Heizkreisrücklaufleitung, die in dem Heizkörper abgekühltes Medium der Heizeinrichtung zuführt,
**gekennzeichnet durch**
eine Armatur umfassend:
- ein Gehäuse,
- in dem sich ein erster Strömungspfad von einer Einlassöffnung zu einem Ventil erstreckt, und
- in dem sich ein zweiter Strömungspfad von dem Ventil zu einer ersten Auslassöffnung erstreckt, und
- in dem sich ein dritter Strömungspfad von dem Ventil zu einer zweiten Auslassöffnung erstreckt,
- wobei das Ventil ein stationäres Grundscheibenelement und ein daran stirnseitig anliegendes drehbares Steuerscheibenelement aufweist,
- ein außerhalb des Gehäuses angeordnetes Betätigungselement, das über eine Kopplungsstange mit dem Steuerscheibenelement gekoppelt und ausgebildet ist, um das Steuerscheibenelement zwischen verschiedenen Rotationspositionen zu schalten, indem das Steuerscheibenelement um eine Rotationsachse verdreht wird,
- wobei das Grundscheibenelement eine erste Durchbruchsöffnung aufweist, die sich über einen ersten Umfangswinkel um die Rotationsachse erstreckt, und eine zweite Durchbruchsöffnung aufweist, die sich über einen zweiten Umfangswinkel um die Rotationsachse erstreckt, wobei die erste und zweite Durchbruchsöffnung im Grundscheibenelement durch eine erste Sperrfläche, die am Grundscheibenelement angeordnet ist, voneinander getrennt sind, und
- das Steuerscheibenelement mindestens eine dritte Durchbruchsöffnung aufweist, die sich über einen dritten Umfangswinkel um die Rotationsachse erstreckt,
- wobei das Betätigungselement mit dem Steuerscheibenelement mechanisch gekoppelt ist zur Übertragung eines Drehmoments um die Rotationsachse,
- wobei die erste, zweite und dritte Durchbruchsöffnung so angeordnet sind und der erste, zweite und dritte Umfangswinkel so dimensioniert sind, dass das Steuerscheibenelement
- zwischen einer ersten Rotationsposition, in welcher die erste Durchbruchsöffnung vollständig überdeckend zu der dritten Durchbruchsöffnung ist, und
- einer zweiten Rotationsposition, in welcher die zweite Durchbruchsöffnung vollständig überdeckend zu der dritten Durchbruchsöffnung ist, und
- einer 0-Stellung, in welcher die erste und die zweite Durchbruchsöffnung vollständig durch eine zweite Sperrfläche die am Steuerscheibenscheibenelement angeordnet ist, verschlossen sind,
- stufenlos hin- und her-rotierbar ist
oder
- eine Armatur nach einem der vorhergehenden Ansprüche 1-10,
- wobei die erste Auslassöffnung mit der Heizkreisvorlaufleitung und die zweite Auslassöffnung mit der Heizrücklaufleitung verbunden ist und die Einlassöffnung mit dem Heizungskörper eines Gebäudes verbunden ist.

14. Verfahren zur Steuerung des Durchflusses durch eine Armatur, umfassend die Schritte:
- Bereitstellen einer Armatur mit einem Gehäuse, das mehrere Strömungspfade und ein Ventil umfasst, wobei das Ventil ein stationäres Grundscheibenelement und ein daran stirnseitig anliegendes drehbares Steuerscheibenelement aufweist,
- Verbinden des Steuerscheibenelements über eine Kopplungsstange mit einem außerhalb des Gehäuses angeordneten Betätigungselement,
- Rotieren des Steuerscheibenelements um eine Rotationsachse, um den Durchfluss durch die Strömungspfade stufenlos zu steuern,
- Schalten des Steuerscheibenelements in eine Mischposition, die sich zwischen der ersten Rotationsposition und der zweiten Rotationsposition befindet, wobei die erste Durchbruchsöffnung und die zweite Durchbruchsöffnung gleichzeitig teilweise überdeckend zu der dritten Durchbruchsöffnung sind,
- Anschließen einer fossilen Bestandsheizung an die erste Auslassöffnung,
- Anschließen einer Wärmepumpe an die zweite Auslassöffnung,
- Rotieren des Steuerscheibenelements, um den Durchfluss von heißem Wasser aus der fossilen Heizung und der Wärmepumpe zu mischen und eine gewünschte Zieltemperatur an der Einlassöffnung zu erreichen.

15. Armatur nach einem der vorhergehenden Ansprüche 1-10, **dadurch gekennzeichnet, dass** das Steuerscheibenelement in eine Schließposition rotierbar ist, die sich zwischen der ersten Rotationsposition und der zweiten Rotationsposition befindet,
- wobei die erste Durchbruchsöffnung und die zweite Durchbruchsöffnung vollständig durch Sperrflächen überdeckt sind, und wobei das Steuerscheibenelement aus der Schließposition gegen den Uhrzeigersinn in die erste Rotationsposition rotierbar ist und im Uhrzeigersinn in die zweite Rotationsposition rotierbar ist, und
- wobei sich die Sperrflächen des Steuerscheibenelements und des Grundscheibenelements jeweils über einen Umfangswinkel erstrecken, der größer ist als der Umfangswinkel der ersten Durchbruchsöffnung und der Umfangswinkel der zweiten Durchbruchsöffnung.
